Europäisches Patentamt

(19) European Patent Office

Office européen des brevets

(11) Veröffentlichungsnummer: **0 065 679**
**A1**

(12) # EUROPÄISCHE PATENTANMELDUNG

(21) Anmeldenummer: **82103914.6**

(22) Anmeldetag: **06.05.82**

(51) Int. Cl.³: **F 28 F 21/06**
**F 28 F 3/12, F 24 J 3/02**
**F 24 D 3/00**

(30) Priorität: **21.05.81 DE 3120173**

(43) Veröffentlichungstag der Anmeldung:
**01.12.82 Patentblatt 82/48**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Michel, Wolfgang**
**Am Hohen Stein 24**
**D-6200 Wiesbaden(DE)**

(72) Erfinder: **Golly, Helmut, Dr.**
**Am Schieferberg 17**
**D-6233 Kelkheim/Ts.(DE)**

(72) Erfinder: **Braunisch, Herbert, Dr.**
**Nelkenweg 8**
**D-6238 Hofheim-Diedenbergen(DE)**

(54) Flächenhaftes flexibles Wärmeaustauscherelement.

(57) Flächenhafter Körper (1) mit für strömungsfähige Medien durchströmbarem Hohlraum, der einen Zulauf für strömungsfähige Medien in den Hohlraum und einen Ablauf für diese aus ihm besitzt, wobei er aus zwei Folienzuschnitten besteht, die seine nur im Bereich ihrer übereinanderliegenden Ränder (6) fest miteinander verbundenen Wandungen (2, 3) bilden und gemeinsam einen Hohlraum einschließen und wenigstens eine Wandung eine große Anzahl in den Hohlraum ragender Vorsprünge (8) besitzt, wobei die Vorsprünge (8) Teilhohlräume (22) begrenzen, die jeweils miteinander in Verbindung stehen und in ihrer Gesamtheit ein für strömungsfähige Medien durchströmbares Kontinuum bilden.

FIG. 1

EP 0 065 679 A1

HOECHST AKTIENGESELLSCHAFT
KALLE Niederlassung der Hoechst AG

Hoe 81/K 028            3. Mai 1982
WLJ-Dr.Wa-df

FLÄCHENHFATES FLEXIBLES WÄRMEAUSTAUSCHERELEMENT

Die Erfindung betrifft einen flächenhaften, flexiblen von strömungsfähigen Medien durchströmbaren Hohlkörper aus Folie.

Nachfolgend wird der flächenhafte, flexible Hohlkörper zur Verwendung als Wärmeaustauscherelement kurz "Wärmeaustauscher" bezeichnet.

Es ist ein flächiges Wärmeabsorberelement bekannt, das aus zwei Zuschnitten aus Kunststoff besteht, die jeweils in Form und Abmessung übereinstimmen, die deckungsfähig zueinander angeordnet und durch Verschweißung fest miteinander verbunden sind. Einer der beiden Zuschnitte hat eine profiliert ausgebildete Oberfläche in Form einer Vielzahl gerader, jeweils parallelabständig zueinander und jeweils parallel zu parallelen Seitenkanten des Zuschnittes verlaufender, sich über die gesamte Zuschnittslänge unterbrechungsfrei erstreckender Kanäle. Die Kanäle haben über ihre gesamte Länge gleichen Querschnitt.
Der andere Zuschnitt hat plane, profilierungsfrei ausgebildete Oberflächen.
Die beiden, gemeinsam das Wärmeabsorberelement bildenden Zuschnitte sind derart zueinander angeordnet, daß sämtliche Kanäle des profiliert ausgebildeten Zuschnitts über ihre gesamte Länge vom zweiten profilierungsfreien Zuschnitt überdeckt werden.

HOECHST AKTIENGESELLSCHAFT
KALLE Niederlassung der Hoechst AG

- 2 -

Die beiden Zuschnitte sind sowohl entlang ihrer jeweils aneinandergrenzenden Ränder, die parallel zu den rohrartigen Kanälen im Wärmeabsorberelement verlaufen, durch Verschweißung fest miteinander verbunden, als auch in allen Bereichen, in denen einander zugewandte Oberflächen der Zuschnitte jeweils unmittelbar aneinandergrenzen.

Durch die genannte Ausbildung des bekannten Wärmeabsorberelements besitzt dies in seinem Inneren viele gerade rohrartige allseitig umschlossene Kanäle. Die Kanäle besitzen über ihre gesamte Länge jeweils gleichbleibenden Querschnitt; sie erstrecken sich jeweils von einer Stirnseite des Wärmeabsorbers zur anderen und münden dort jeweils.

Die rohrartigen Kanäle im Inneren des bekannten Wärmeabsorberelements sind jeweils unterbrechungsfrei durchgehend ausgebildet; zwischen jeweils benachbarten rohrartigen Kanälen besteht keine Verbindung, die Übertritt von Flüssigkeit von einem Kanal zum anderen erlaubt.

Bei dem bekannten Wärmeabsorberelement wird die zu erwärmende Flüssigkeit über dessen gesamte Stirnseite gleichzeitig zugeführt und tritt dort in die Mündungsöffnungen der rohrartigen Kanäle ein, durchfließt diese jeweils praktisch laminarströmend und tritt an der anderen Stirnseite des Elements aus den Mündungsöffnungen der Kanäle wieder aus diesen aus.

H O E C H S T   A K T I E N G E S E L L S C H A F T
KALLE  Niederlassung der Hoechst AG

- 3 -

Die Übertragung von Wärme auf im Wärmeabsorberelement befindliche Flüssigkeit erfolgt jeweils im Bereich der bezeichneten Kanäle desselben.

Infolge der geometrischen Ausbildung der Kanäle findet in diesen keine intensive Verwirbelung der sie durch-. strömenden Flüssigkeit statt; es erfolgt auch keine Durchmischung von Flüssigkeit, die in einem der Kanäle fließt mit solcher, die einen benachbarten Kanal durchströmt.

Der Erfindung liegt die Aufgabe zugrunde, einen in der Energietechnik universell einsetzbaren, baulich einfach ausgebildeten flächenhaften, flexiblen Hohlkörper, der aus zwei flexiblen Folienzuschnitten aufgebaut ist, vorzuschlagen, in dessen Hohlraum intensive Verwirbelung des diesen durchströmenden strömungsfähigen Mediums erfolgt.

Die der Erfindung zugrundeliegende Aufgabe wird gelöst durch ein Erzeugnis der in Anspruch 1 angegebenen Ausbildung. Besondere Ausgestaltungen des erfindungsgemäßen Erzeugnisses sind in den auf Anspruch 1 rückbezogenen Unteransprüchen 2 bis 8 konkretisiert.

Unter einem Wärmeaustauscherelement bzw. Wärmeaustauscher wird nachfolgend definitionsgemäß ein flächiger Hohlkörper verstanden, dessen Hohlraum bzw. die diesen bildenden Teilhohlräume von strömungsfähigem Medium durchströmbar ist bzw. bei bestimmungsgemäßer Anwendung des Wärmeaustauschers von diesem durchströmt wird,
wobei er seiner Umgebung thermische Energie entzieht
und diese auf das in seinem Hohlraum strömende strömungsfähige Medium übertragen wird oder bei dem das in
seinem Hohlraum strömende strömungsfähige Medium über
die Wandung des Hohlkörpers thermische Energie an die
Umgebung abgibt.

Als strömungsfähige Medien werden Flüssigkeiten, insbesondere Wasser oder wäßrige Lösungen sowie Gase, insbesondere Luft, bezeichnet.

Der flächenhafte Wärmeaustauscher besteht aus zwei in
Form und Abmessung jeweils übereinstimmenden, bevorzugt
rechteckigen Folienzuschnitten, die deckungsfähig zueinander angeordnet und nur im Bereich ihrer Ränder
fest miteinander verbunden sind, beispielsweise durch
Verschweißung, Versiegelung oder Verklebung. Die in
angegebener Weise miteinander verbundenen, den Wärmeaustauscher bildenden Folienzuschnitte umschließen
gemeinsam den von strömungsfähigem Medium durchströmbaren bzw. den von diesem durchströmten Hohlraum des
Wärmeaustauschers.

Die Folienzuschnitte haben bevorzugt jeweils gleiche
Dicke, vorteilhaft jeweils eine Dicke im Bereich von 10
bis 1 000 /um, insbesondere 50 bis 500 /um.

Die Zuschnitte bestehen jeweils aus flexibler Folie,
beispielsweise aus dünner Metallfolie, insbesondere bevorzugt jedoch aus Folie aus thermoplastischem Kunststoff. Ganz besonders bevorzugt bestehen die Zuschnitte
aus Polyethylen-, Polypropylen-, Polyvinylchlorid- oder
Polytetrafluorethylen-Folie.

Wenigstens eine Wandung des Wärmeaustauschers besteht
aus einem Folienzuschnitt, der auf einer Seite eine
große Anzahl von Vorsprüngen besitzt. Die Vorsprünge
sind jeweils abständig, bevorzugt gleichabständig,
voneinander angeordnet. Die Anordnung der Vorsprünge
zueinander ist vorteilhaft regelmäßig, insbesondere
vorteilhaft sind die Vorsprünge in Reihe versetzt gegeneinander angeordnet; die Vorsprünge ragen jeweils in
den von den Wandungen des Wärmeaustauschers umschlossenen Hohlraum hinein.

Unter "einer großen Anzahl von Vorsprüngen" soll definitionsgemäß verstanden werden, daß profiliert ausgebildete Wandungen des Wärmeaustauschers wenigstens
einen Vorsprung pro 100 cm$^2$ Wandungsoberfläche besitzen.

Durch die Vorsprünge in einer Wandung eines Wärmeaustauschers bzw. durch die Vorsprünge in den Wandungen
eines Wärmeaustauschers sind deren Gesamthohlräume
jeweils in eine große Anzahl von jeweils miteinander
kommunizierenden Teilhohlräume unterteilt, die in ihrer
funktionellen Gesamtheit jeweils ein Hohlraumkontinuum
bilden.

Die Vorsprünge haben bevorzugt jeweils gleiche Form und

- 6 -

jeweils gleiche Abmessung der Querschnittsflächen; bevorzugt ist der Durchmesser der Vorsprungsquerschnittsfläche über die gesamte Höhe des Vorsprunges gleichbleibend. Vorteilhaft haben die Vorsprünge jeweils kreisförmig begrenzten Querschnitt.

Die Vorsprünge, die vorteilhaft gleiche Höhe, besonders vorteilhaft eine solche im Bereich von 1 bis 10 mm, bevorzugt 2 bis 5 mm, besitzen, bewirken intensive Verwirbelung des die Teilhohlräume durchströmenden strömungsfähigen Mediums.

Die Vorsprünge können auch sechseckige oder achteckige Querschnittsflächen besitzen. Es ist auch möglich, daß die Umfangsflächen der Vorsprünge profiliert ausgebildet sind und beispielsweise nach außen ragende Noppen haben.
Die Längsachsen der Vorsprünge bilden bevorzugt rechte Winkel mit der Folienebene, aus der die Vorsprünge herausragen. Die Vorsprünge haben bevorzugt plane Stirnflächen an ihrem Ende; die planen Stirnflächen erstrecken sich bevorzugt in Ebenen, die parallel zur Zuschnittsebene verlaufen, aus der die Vorsprünge herausragen. Bevorzugt grenzen die Enden praktisch sämtlicher Vorsprünge in der einen Wandung eines Wärmeaustauschers unmittelbar an nicht profiliert ausgebildete Bereiche der Innenseite der anderen Wandung desselben an, ohne jedoch mit dieser in fester Verbindung zu stehen. Die Vorsprünge wirken daher als Ab-

HOECHST AKTIENGESELLSCHAFT
KALLE Niederlassung der Hoechst AG

- 7 -

standshalter zwischen den beiden Wandungen des Wärmeaustauschers.

Der Abstand benachbarter Vorsprünge ist vorteilhaft
größer als der Vorsprungsdurchmesser.

Bei Vorsprüngen mit kreisförmiger Querschnittsbasisfläche, beispielsweise eines Durchmessers von 0,2 cm,
die beispielsweise jeweils einen Abstand von 0,3 cm
voneinander besitzen, sind in einer profilierten Wandung des Wärmeaustauschers beispielsweise vorteilhaft
40 000 Vorsprünge pro m$^2$ Wandung vorhanden. Die
Vorsprünge einer profilierten Wandung des Wärmeaustauschers sind vorteilhaft jeweils gleichabständig
nebeneinander auf geraden, parallel abständig zueinander
verlaufenden Linien angeordnet.

Die Vorsprünge sind bei der genannen Anordnung vorteilhaft auf Lücke zueinander angeordnet.

Die Teilhohlräume sind seitlich jeweils durch benachbarte Vorsprünge begrenzt; oben und unten grenzen die
Teilhohlräume jeweils an plane Bereiche der Wärmeaustauscherwandungen an.

Bei bestimmungsgemäßer Verwendung des Wärmeaustauschers
durchströmt strömungsfähiges Medium zugleich praktisch
sämtliche des Hohlraumkontinuum bildende Teilhohlräume,
wobei das strömungsfähige Medium durch die Wirkung der
Vorsprünge in den Teilhohlräumen jeweils intensiv verwirbelt wird.

HOECHST AKTIENGESELLSCHAFT
KALLE Niederlassung der Hoechst AG

- 8 -

Bevorzugt ist wenigstens eine Wandung eines Wärmeaustauschers derart ausgebildet, daß sie aus einem Folienzuschnitt besteht, bei dem in diese eingeformte Folien integrale Hohlvorsprünge, deren Mittellängsachsen jeweils einen rechten Winkel mit der Folienebene bilden, aus diesem jeweils in gleicher Richtung herausragen. Die Wandungen der Vorsprünge sind jeweils unterbrechungsfrei ausgebildet, d.h. sie besitzen keine Öffnungen, durch die strömungsfähiges Medium hindurchtreten könnte; die Innenseiten der hohlen konvexen Vorsprünge auf einer Seite der Folie bilden dabei die Oberflächen von den Vorsprüngen gegengleich ausgebildeten Folieneinwölbungen in Form von Mulden auf der anderen Folienseite.

Derartig profiliert ausgebildete Folien sind beispielsweise herstellbar, indem man von einem Zuschnitt aus thermoplastischer Kunststoffolie ausgeht, diese durch Erwärmen in warmformbaren Zustand überführt und dann durch Tiefziehen der Folie in bekannter Weise mittels bekannter Vorrichtungen Vorsprünge der gewünschten Form und Abmessung in gewünschter Anordnung und Anzahl einformt und danach den Folienabschnitt abkühlt. Profiliert ausgebildete Folienzuschnitte bevorzugter Ausgestaltung können auch derart weitergebildet sein, daß die Mulden in den Folienzuschnitten mit chemischen Substanzen, die pro Volumeneinheit hohes Wärmespeichervermögen besitzen oder chemischen Verbindungen, deren Umwandlungspunkte erster oder zweiter Ordnung im Arbeitstemperaturbereich des Wärmeaustauscher liegen, gefüllt sind, beispielsweise mit Oxalsäuredimethylester. Die Mulden aufweisende Oberfläche des Folienzuschnitts ist dabei abgedeckt durch eine dünne Kunststoffolie, beispielsweise einer Folie aus Polyvinylchlorid, die beispielsweise eine Dicke von 50 $\mu$m besitzt. Die Abdeckfolie ist mit ihrer Unterlage durch Verschweißung, Versiegelung oder Verklebung fest verbunden. Bei bestimmungsgemäßer Verwendung des Wärmeaustauschers tritt strömungsfähiges Medium, beispielsweise Wasser, durch eine Öffnung in einer Wandung des Wärmeaustauschers, die bevorzugt in der Nähe der Stirnseite desselben liegt, in den raumunterteilten Hohlraum desselben ein und tritt nach Durchströmen der Teilhohlräume durch eine zweite Öffnung aus der Wandung des Wärmeaustauschers aus, wobei sich die zweite Öffnung bevorzugt in der Nähe der zweiten Stirnseite des Wärmeaustauschers befindet.

Die Eintrittsöffnung liegt der Austrittsöffnung vorteilhaft diametral gegenüber.

Ein aus einem Folienzuschnitt bestehender Formkörper in Gestalt einer flachen Wanne wird definitionsgemäß ebenfalls als Folienzuschnitt bezeichnet und kann eine Wandung des Wärmeabsorbers bilden. Bei dem wannenartigen Formkörper ragen aus dessen Boden eine große Anzahl wie angegeben ausgebildeter, dimensionierter Vorsprünge in der bezeichneten Anordnung in den Wannenhohlraum hinein. Die umlaufende Wannenseitenwand besitzt eine Höhe, die der Vorsprungshöhe entspricht.

Am oberen Rand der Wannenseitenwand ist ein nach außen wegragender integraler planer Flanschrand vorgesehen, der die gesamte Wannenhohlraummündungsöffnung umläuft und sich in einer Ebene erstreckt, die parallelabständig zu der Wannenbodenebene verläuft.

Definitionsgemäß sollen Folienzuschnitte, auf deren Oberfläche feste Partikel statistisch oder gleichmäßig derart verteilt befestigt sind, daß sich zwischen benachbarten Partikeln jeweils Freiräume befinden, als Folienzuschnitte mit Vorsprüngen gelten. Die Partikel haben vorteilhaft gleiche Form und Abmessung, sie sind bevorzugt von würfelförmiger Gestalt.
Vorteilhaft bestehen die festen Partikel aus demselben Werkstoff, aus dem der Folienzuschnitt besteht, auf dessen Oberfläche sie befestigt angeordnet sind. Die Partikel sind an ihrer Unterlage durch Verschweißung, Versiegelung oder Verklebung befestigt.

Bei bestimmungsgemäßer Verwendung des Wärmeaustauschers als Solarenergieabsorber kommt wenigstens eine Wandung des Wärmeaustauschers mit Sonnenlicht in Kontakt. Die wärmebeaufschlagte Wandung gibt die aufgenommene Wärme an ein strömungsfähiges Medium, beispielsweise Wasser, das den raumunterteilten Hohlraum des Wärmeaustauschers durchströmt, ab. Der Übergang von Wärme von einer wärmebeaufschlagten Wand des Wärmeaustauschers auf das im Vergleich zu dieser kältere strömungsfähige Medium im raumunterteilten Hohlraum des Wärmeaustauschers wird durch die in dessen Teilhohlräumen stattfindende intensive Verwirbelung des

HOECHST   AKTIENGESELLSCHAFT
KALLE  Niederlassung der Hoechst AG

- 11 -

strömungsfähigen Mediums, insbesondere im Bereich der Phasengrenzflächen zwischen der Oberfläche einer erwärmten Wandung des Wärmeabsorbers und dem unmittelbar an diese angrenzendem strömungsfähigem Medium, begünstigt.

Bei der genannten Verwendung des Wärmeaustauschers wird strömungsfähiges Medium in Form von Flüssigkeit, beispielsweise Wasser, fortlaufend durch den raumunterteilten Hohlraum desselben gepumpt oder gesaugt. Die Flüssigkeit tritt dabei durch die Eintrittsöffnung in der Wand des Wärmeaustauschers in diesen ein und aus der Austrittsöffnung wieder aus; sie durchströmt dabei praktisch das gesamte Hohlraumkontinuum des Wärmeaustauschers, d.h. durchströmt zugleich praktisch sämtliche Teilhohlräume des Wärmeaustauschers.

Sofern als strömungsfähiges Medium, wie angegeben Flüssigkeit, bevorzugt Wasser, verwendet wird, durchströmt dieses den raumunterteilten Hohlraum des Wärmeaustauschers annähernd drucklos oder mit einem Druck bis 0,2 bar Überdruck, bevorzugt jedoch mit einem Überdruck bis zu 0,5 bar. Der Wärmeaustauscher gleicht aufgrund seiner baulichen Ausbildung - die ihn bildenden Folienzuschnitte sind nur im Randbereich miteinander verbunden - in seinem Hohlraum etwa entstehende Druckstöße in bestimmten Grenzen selbständig aus.

Bei einem Druck im Hohlraum des Wärmeaustauschers der über dem Druck der Umgebung liegt, werden dessen Wandungen jeweils nach außen gewölbt, wodurch das Volumen des Wärmeaustauscherhohlraums vergrößert wird. Bei wieder absinkendem Innendruck stellen sich die Wandungen des Wärmeaustauschers infolge ihrer Elastizität von selbst wieder in ihre ursprüngliche Lage zurück.

Bei Verwendung des Wärmeaustauschers als Solarenergieabsorber besteht vorzugsweise wenigstens eine Wandung desselben aus einem schwarzen Folienzuschnitt, beispielsweise aus mit Ruß pigmentierter Kunststofffolie.

Der Wärmeaustauscher ist auch als Fußbodenheizung verwendbar. Bei dieser Verwendung durchströmt strömungsfähiges Medium, beispielsweise Wasser oder Luft, den Wärmeaustauscherhohlraum, wobei die Temperatur des strömungsfähigen Mediums höher ist als die Umgebungstemperatur des Wärmeaustauschers.

Die Erfindung wird anhand einer fünf Figuren umfassenden Zeichnung beispielhaft erläutert.

In Fig. 1 ist ein erfindungsgemäßes Erzeugnis in perspektivischer Darstellung und zur besonderen Verdeutlichung der Ausbildung der den Hohlraum des Wärmeaustauschers in Teilhohlräume unterteilenden Vorsprünge teilweise aufgebrochen dargestellt.

Figuren 2 bis 5 zeigen im Querschnitt und in schematischer Darstellung jeweils besondere Ausführungsformen der Erfindung.

- 13 -

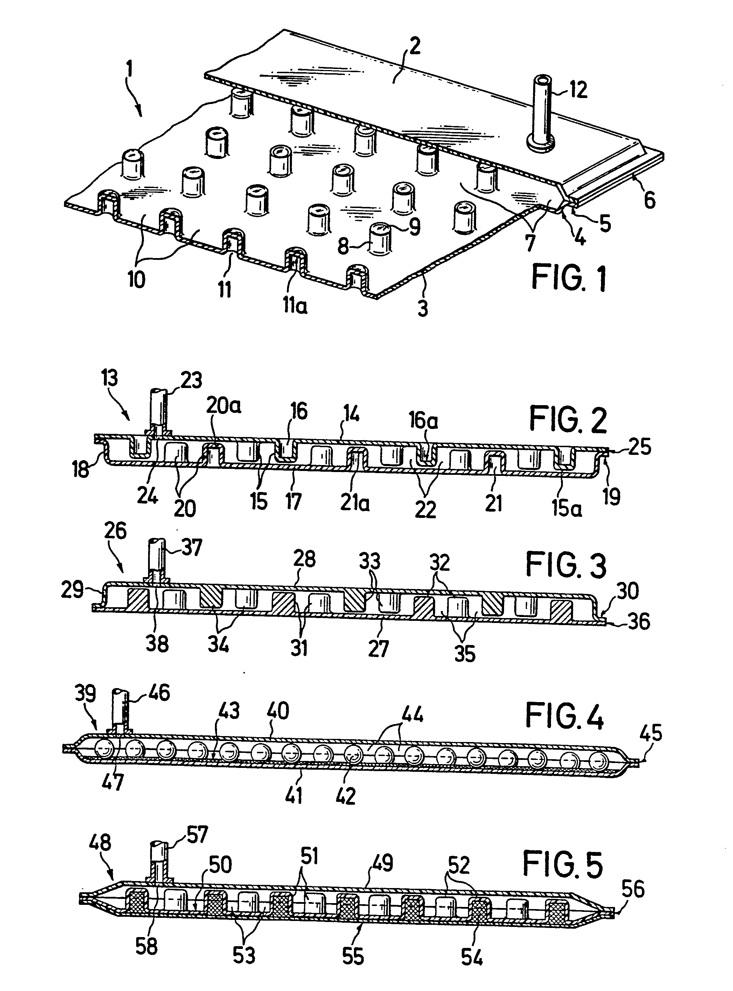

In Fig. 1 bedeutet 1 einen Wärmeaustauscher in seiner Gesamtheit, 2 eine plane Wandung desselben und 3 die andere Wandung, die profiliert ausgebildet ist und die Form einer flachen Wanne besitzt. 4 ist die Seitenwand der wannenförmigen Wandung und 5 ein nach außen wegragender flanschartiger Umfangsrand an der Seitenwand 4; es ist 6 der Randbereich des Wärmeaustauscher, in welchem seine Wandungen 2 und 3 miteinander verbunden sind; 7 bedeutet den von den Mündungen 2 und 3 begrenzten Gesamthohlraum des Wärmeaustauschers, 8 sind Vorsprünge der Wand 3 mit Stirnflächen 9; die Vorsprünge 8 unterteilen den Gesamthohlraum in Teilhohlräume 10; es ist 11 eine Mulde, 11a der Muldenboden, 12 ist ein Rohrstutzen am Wandteil 2 der zum Ein- bzw. Auslaß von strömungsfähigem Medium in bzw. aus dem Wärmeaustauscher durch die nicht sichtbare Ein- bzw. Auslaßöffnung in der Seitenwand 2.

In Fig. 2 ist 13 ein weiteres Erzeugnis gemäß der Erfindung in seiner Gesamtheit, 14 ist die eine Wandung des Wärmeaustauschers, die profiliert ausgebildet ist, wobei 15 ein Vorsprung mit Stirnflächen 15a in dieser Wandung und 16 eine Mulde mit Muldenboden 16a ist, 17 ist die andere Wandung des Wärmeaustauschers. Sie ist ebenfalls profiliert ausgebildet und hat die Form einer flachen Wanne, wobei 18 die Seitenwand derselben und 19 ein nach außen ragender flanschartiger Rand an dieser ist; es bedeuten 20 Vorsprünge in der Wandung 17 und 20a die Vorsprungsstirnflächen, 21 ist eine Mulde mit Muldenboden 21a; 22 sind Teilhohlräume und 23 ist ein Rohrstutzen in Wandung 14 zum Ein- bzw. Auslaß von strömungsfähigem Medium in den Wärmeaustauscher durch die Ein- bzw. Auslaßöffnung 24 in der Wand 14; es ist 25 der Rand des Wärmeaustauschers, im Bereich dessen seine Wandungen 14 und 17 aneinander befestigt sind.

In Fig. 3 wird eine Ausführungsform des erfindungsgemäßen Erzeugnisses dargestellt, die in ihrer Gesamtheit mit 26 bezeichnet wird; 27 ist die eine und 28 die andere profilierte Wandung des Wärmeaustauschers. Die Wandung 28 ist in Form einer flachen Wanne ausgebildet, deren Seitenwand mit 29 bezeichnet ist. 30 ist ein nach außen wegragender Rand an der Seitenwand 29; es sind 31 Vorsprünge in der Wandung 27 und 32 Stirnflächen derselben. Die Wandung 28 besitzt Vorsprünge 33, deren Stirnflächen mit 34 bezeichnet werden. 35 sind Teilhohlräume, 36 ist der Rand des Wärmeaustauschers, im Bereich dessen seine Wandungen 27 und 28 aneinander grenzen. 37 ist ein Rohrstutzen zum Ein- bzw. Auslaß von strömungsfähigem Medium in den Hohlraum des Wärmeaustauschers durch die Ein- bzw. Austrittsöffnung 38.

In Fig. 4 bedeutet 39 eine besondere Ausführungsform des Erzeugnisses in seiner Gesamtheit, 40 ist eine Wandung des Wärmeaustauschers, sie ist unprofiliert. 41 ist die zweite Wandung des Wärmeaustauschers, sie ist profiliert ausgebildet. 42 sind Vorsprünge der Wandung 41 in Form von Partikeln, 43 ist eine Bindemittelschicht. 44 sind Teilhohlräume, 45 ist ein Rand, im Bereich dessen die Wandungen 40 und 41 fest miteinander verbunden sind, 46 ist ein Rohrstutzen zum Ein- bzw.
Auslaß von strömungsfähigem Medium in den Hohlraum des
Wärmeaustauschers durch die Ein- bzw. Austrittsöffnung
47.

In Fig. 5 ist eine weitere besondere Ausgestaltung der
Erfindung dargestellt, die in ihrer Gesamtheit mit 48
bezeichnet wird. 49 ist eine plane Wandung und 50 eine
profilierte Wandung. 51 sind Vorsprünge in der Wandung
50, es sind 52 die Vorsprungsstirnflächen; 53 sind
Teilhohlräume; 54 ist eine chemische Substanz  mit
hohem Wärmespeichervermögen bezogen auf die Volumeneinheit oder eine chemische Verbindung, deren Umwandlungspunkt erster oder zweiter Ordnung im Arbeitstemperaturbereich des Wärmeaustauschers liegt. 55 ist eine
Abdeckfolie, 56 der Rand des Wärmeaustauschers, im
Bereich dessen seine Teile 49 und 50 miteinander verbunden sind. 57 ist ein Rohrstutzen zum Ein- bzw.
Auslaß von strömungsfähigem Medium in den Hohlraum des
Wärmeaustauschers durch die Ein-bzw. Austrittsöffnung
58 in der Wandung 49.

-----

## PATENTANSPRÜCHE

1. Flächenhafter Körper mit für strömungsfähige Medien durchströmbarem Hohlraum in seinem Inneren, wobei der Hohlkörper einen Zulauf für strömungsfähige Medien in dessen Hohlraum und einen Ablauf für diese aus ihm besitzt, dadurch gekennzeichnet, daß der Hohlkörper aus zwei Zuschnitten aus flexibler Folie besteht, die seine Wandungen bilden und gemeinsam einen Hohlraum begrenzen, wobei die Zuschnitte nur im Bereich ihrer übereinanderliegenden Ränder fest miteinander verbunden sind und wenigstens eine Wandung eine große Anzahl in den Hohlkörperhohlraum ragender Vorsprünge besitzt, wobei jeweils benachbarte Vorsprünge Teilhohlräume begrenzen, die jeweils miteinander in Verbindung stehen und die in ihrer Gesamtheit ein für strömungsfähige Medien durchströmbares Hohlraumkontinuum bilden.

2. Hohlkörper nach Anspruch 1, dadurch gekennzeichnet, daß eine Wandung desselben aus einem Folienzuschnitt mit Vorsprüngen besteht.

3. Hohlkörper nach Anspruch 1, dadurch gekennzeichnet, daß beide Wandungen desselben aus Folienzuschnitten mit Vorsprüngen bestehen.

4. Hohlkörper nach Anspruch 1 und 2, dadurch gekennzeichnet, daß eine Hohlkörperwandung aus einem Formkörper aus Folie in Gestalt einer flachen Wanne, aus

deren Boden Vorsprünge in den Wannenboden ragen und die am oberen Rand ihrer Seitenwand einen integralen horizontal nach außen wegragenden planen Umfangsrand besitzt, besteht, und die andere Wandung des Hohlkörpers ein Folienzuschnitt mit unprofilierten Oberflächen bildet, wobei die beiden Hohlkörperwandungen nur im Bereich ihrer Ränder fest miteinander verbunden sind.

5. Hohlkörper nach Anspruch 1 bis 5, dadurch gekennzeichnet, daß seine Wandungen jeweils aus flexiblen Kunststoffolien wie Polyethylen-, Polypropylen-, Polytetrafluorethylen- oder Polyvinylchlorid-Folie bestehen.

6. Hohlkörper nach Anspruch 1 und 2, dadurch gekennzeichnet, daß eine Wandung desselben aus einer Folie, die eine Vielzahl von Vorsprüngen in Form von Granulatpartikeln besitzt, die an ihrer Oberfläche befestigt sind, besteht und die andere Wandung durch einen Zuschnitt einer profilierungsfreien Folie gebildet wird.

7. Hohlkörper nach Anspruch 1 bis 4 und 6, dadurch gekennzeichnet, daß Vorsprünge aufweisende Wandungen des Hohlkörpers aus Kunststoffolienzuschnitten bestehen, die eine Vielzahl jeweils hohler unterbrechungsfrei ausgebildeter Vorsprünge besitzen, wobei Vorsprünge auf der einen Folienseite gegengleich ausgebildeten Mulden auf der anderen Folienseite entsprechen.

HOECHST AKTIENGESELLSCHAFT
KALLE Niederlassung der Hoechst AG

Hoe 81/K 028                    - 18 -

8. Hohlkörper nach Anspruch 1 bis 4 sowie 6 und 7, dadurch gekennzeichnet, daß die Mulden mit Substanzen hohen Wärmespeichervermögens, bezogen auf die Volumeneinheit oder mit chemischen Verbindungen gefüllt sind, die Umwandlungspunkte erster oder zweiter Ordnung im Arbeitstemperaturbereich des Wärmeaustauschers besitzen, wobei die Mulden aufweisende Wandungsoberfläche mit einer an dieser befestigten dünnen Kunststoffolie abgedeckt ist.

9. Verwendung eines Hohlkörpers nach Anspruch 1 bis 8 als Solarenergieabsorber oder -kollektor.

10. Verwendung eines Hohlkörpers nach Anspruch 1 bis 8 als Energiedach in Kombination mit einer Wärmepumpe.

11. Verwendung eines Hohlkörpers nach Anspruch 1 bis 8 als Energiestapel in Kombination mit einer Wärmepumpe.

12. Verwendung eines Hohlkörpers nach Anspruch 1 bis 8 als Wärmeaustauscher.

13. Verwendung eines Hohlkörpers nach Anspruch 1 bis 8 als Fußbodenheizung.

-----

FIG. 1

FIG. 2

FIG. 3

FIG. 4

FIG. 5

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 018 823 (DU PONT) *Seite 3, Zeilen 9-23; Seite 4, Zeilen 7-11; Seite 4, Zeilen 29-31; Anspruch 1; Figur 3* | 1,2,4, 5,12 | F 28 F 21/06 F 28 F 3/12 F 24 J 3/02 F 24 D 3/00 |
| | --- | | |
| X | FR-A-2 230 403 (DU PONT) *Seite 6, Zeile 27 - Seite 7, Zeile 5; Seite 16, Zeile 33 - Seite 17, Zeile 13; Seite 21, Zeile 24 - Seite 22, Zeile 9; Figuren 1,2,3,28,34* | 1,2,3, 5,7,12 | |
| | --- | | |
| A | FR-A-2 132 666 (LEYBOLD) *Seite 2, Zeilen 26-29; Seite 3, Zeilen 9-17; Figuren 1-3* | 1,2,4, 5,12 | |
| | --- | | **RECHERCHIERTE SACHGEBIETE (Int. Cl. ³)** |
| A | FR-A-2 161 913 (UNION CARBIDE) *Seite 25, Zeilen 5-19; Figuren 5,5B,5C; Seite 1, Zeilen 1-6* | 1,3,7, 12 | F 28 F F 24 J F 24 D |
| | --- | | |
| A | US-A-2 421 245 (DALZELL et al.) | | |
| | --- | | |
| A | WO-A-8 000 487 (NIGG) *Seite 4, Zeilen 21-23; Figuren 1,3* | 1,9 | |
| | --- | | |
| A | GB-A- 107 652 (WOOD) | | |
| | --- | | |

-/-

Der vorliegende Recherchenbericht wurde für alle Patentansprüche erstellt.

| Recherchenort | Abschlußdatum der Recherche | Prüfer |
|---|---|---|
| DEN HAAG | 16-08-1982 | FILTRI G. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-1 730 139 (HARRISON) --- | | |
| A | FR-A-2 373 025 (HOECHST) --- | | |
| P,A | EP-A-0 042 613 (HOLL) *Seite 12, Zeilen 19-21; Figur 2* ----- | 6 | |

RECHERCHIERTE SACHGEBIETE (Int. Cl. 3)

Der vorliegende Recherchenbericht wurde für alle Patentansprüche erstellt.

| Recherchenort DEN HAAG | Abschlußdatum der Recherche 16-08-1982 | Prüfer FILTRI G. |
|---|---|---|